(19) Europäisches Patentamt
European Patent Office
Office européen des brevets

(11) **EP 4 506 770 A1**

(12) **EUROPEAN PATENT APPLICATION**

(43) Date of publication:
**12.02.2025 Bulletin 2025/07**

(21) Application number: **23190611.6**

(22) Date of filing: **09.08.2023**

(51) International Patent Classification (IPC):
**G05D 1/00** (2024.01)

(52) Cooperative Patent Classification (CPC):
**B64C 29/0033; B64C 39/12; G05D 1/49;**
B64C 9/38; B64C 13/16; B64D 31/06;
G05D 2105/22; G05D 2109/23

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Lilium GmbH**
**82234 Wessling (DE)**

(72) Inventors:
• **Machanek, Valentin**
  **82234 Wessling (DE)**
• **Dodenhöft, Jens**
  **82234 Wessling (DE)**
• **Meiner, Matthias**
  **82234 Wessling (DE)**

(74) Representative: **Mathys & Squire**
**Theatinerstraße 7**
**80333 München (DE)**

(54) **AIRCRAFT CONTROL**

(57) The invention relates to a computer implemented method for controlling an aircraft, the aircraft having multiple control effectors, the method comprising: determining a global force and/or moment allocation required to control movement of the aircraft, the global force and/or moment allocation relating to a net force and/or moment to act on the aircraft; determining a local force and/or moment allocation, the local force and/or moment allocation relating to a force and/or moment contribution to the net force provided by at least one of the control effectors; and controlling at least one of the control effectors to generate the determined local force and/or moment. The invention also relates to an aircraft comprising a processor and memory storing computer code which, when executed on the processor, performs the method.

Fig. 1

**Description**

Field of Invention

This invention relates to aircraft control, and in particular a computer implemented method for controlling an aircraft and an aircraft comprising a processor and memory storing computer code which, when executed on the processor, performs the method.

Background

The allocation of force and moment commands on an aircraft with multi-purpose control effectors is a very complex, multi-dimensional problem. This is because a multi-purpose control effector may be used to generate forces and moments in all six degrees of freedom at the same time. Also, the relationship between a change of the control effector condition and the generation of forces and moments changes as a function of the airspeed, the environmental conditions, and the control effector condition itself. The problem becomes yet more complex for vertical take-off and landing aircraft which are associated with highly nonlinear and coupled aerodynamic phenomena. These couplings and nonlinearities need to be captured by the allocation algorithm as accurately as possible. The problem is complexified yet further if the control effector unit is controlled by a combination of actuators (for example, a propulsion unit installed inside a movable aerodynamic control surface).

The complexity of the control allocation algorithm requires storing a very large amount of data on the flight control computer(s), potentially exceeding the memory limitations of the computer(s) or requiring additional computing hardware to be installed on the aircraft.

The present invention seeks to at least partly ameliorate this problem.

Summary of the Invention

Aspects and embodiments of the present invention are set out in the appended claims. These and other aspects and embodiments of the invention are also described herein.

The above described problem is solved by a computer implemented method for controlling an aircraft, the aircraft having multiple control effectors, the method comprising: determining a global force and/or moment allocation required to control movement of the aircraft, the global force and/or moment allocation relating to a net force and/or moment to act on the aircraft; determining a local force and/or moment allocation, the local force and/or moment allocation relating to a force and/or moment contribution to the net force provided by at least one of the control effectors; and controlling at least one of the control effectors to generate the determined local force and/or moment.

Therefore, with the present invention, the global force and/or moment (which is the net of all forces contributions, including gravity, propulsion, and aerodynamic forces acting on the aircraft) is broken down and distributed to local forces (that is, force contributions to be generated by each of the respective control effectors to make up the global force/moment). In this way, the complex global control allocation problem can be broken down into several simpler local control allocation problems. The local control allocation problems can be solved by determining a set of parameters for each control effector that generate the local force contribution to the global force/moment.

Advantageously, the present invention yields a reduction in the required data by breaking the global force/moment allocation problem down into multiple local force/moment allocation problems. This method therefore reduces the memory consumption of the control allocation algorithm thereby complying with the memory limitations of the flight control computer(s). This method also reduces the complexity of the design of the control allocation algorithm and the complexity of the testing of the control allocation algorithm.

While the present invention can be applied to a variety of aircraft configurations, the invention is particularly advantageous when applied to vertical take off and landing (VTOL) aircraft. This is because such aircraft typically include multi-purpose control effectors which generate forces and moments in multiple degrees of freedom. Such multi-purpose control effectors, particularly those which generate forces and moments in more than two degrees of freedom, are much less commonly found in civil aircraft, if found at all.

The method may also comprise determining at least two local force and/or moment allocations relating to force and/or moment contributions to the net force provided by at least two control effectors. In this way, the method involves breaking down the global force and/or moment allocation problem into at least two local force and/or moment allocation problems, for example one allocation problem for each wing in a pair of wings. Alternatively, the allocation problem may cover multiple control effectors, for example one local allocation problem for a pair of canards, and another local allocation problem for a pair of wings. Breaking down the global allocation problem into multiple local allocation problems simplified the control allocation algorithm and yields a reduction of the data required to be stored on the flight control computer(s).

Each of the at least two local force and/or moment allocations may correspond to a different degree of freedom of the aircraft. For example, each of the local force and/or moment allocations may correspond to a different one of: an x-direction; a z-direction; a roll moment; a pitch moment; and a yaw moment. Breaking down the global allocation problem into multiple local allocation problems in this way further simplifies the control allocation algorithm.

Controlling the at least one of the control effectors may comprise adjusting at least one parameter of the control effectors to generate the local force and/or moment. The parameters of the control effectors may include, for example, a flap angle or an engine rotor speed (effectively, an engine power). The parameters may be determined by solving the local control allocation problems with reference to a simulation, the simulation providing information on the forces generated by the control effectors as a function of the control effector parameters.

The at least one parameter may be adjusted based, at least in part, on at least one condition external to the aircraft. Similarly, the local force and/or moment allocation may be determined based, at least in part, on at least one condition external to the aircraft. In particular, the at least one parameter may be adjusted, and the local force and/or moment allocation may be determined, based at least in part on at least one of: airspeed; ambient air density; aerodynamic angle of attack; and the impact of the canards' operating conditions on the local forces generated by the wings (e.g., canard downwash/canard-wing interaction) which may be captured by scheduling the local force allocation on the wings over the canard operating conditions (i.e., canard flap angle and/or canard rotor speed).

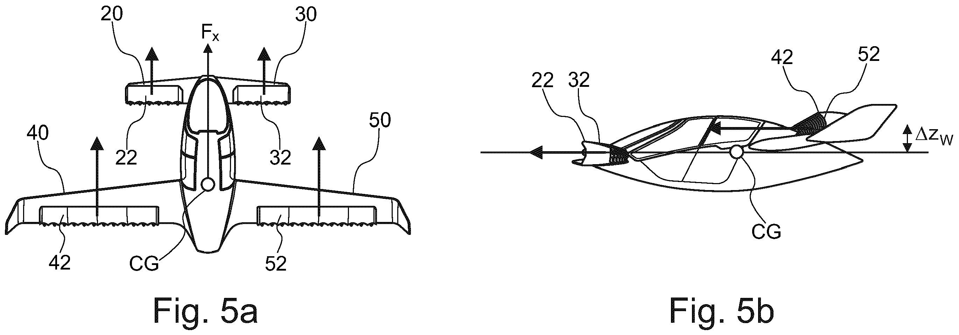

The local force and/or moment allocation for one control effector may be determined, at least in part, to compensate for a force and/or moment generated by another control effector. For example, an x-force generated by one control effector located above the centre of gravity of the aircraft may generate a downward pitch moment. Thus, another control effector must compensate for this pitch moment by generating an opposing moment correction. This concept is described in more detail below with reference to Figures 5a and 5b.

The at least one control effector may comprise at least one engine. In particular, the control effector may comprise at least one propulsion engine. The control effector may include multiple engines, such as a plurality of engines arranged adjacent one another. The multiple engines may be arranged in pairs. The engines may be for example ducted electric vectored thrust engines.

The propulsion engine may be an electric propulsion engine with a ducted fan. An electric propulsion engine can generate quicker changes in load than a comparable gas turbine engines for example. This is advantageous when controlling the control effectors to generate the local forces.

Controlling the at least one of the control effectors may comprise adjusting a thrust of the at least one propulsion engine. Depending on the angle of the engine relative to the aircraft canard or wing, the propulsion engine may provide an x-force or a z-force or a combination of both. The amount by which the engine thrust should be adjusted to generate a particular force may be determined with reference to a simulation.

The control effectors may comprise multiple propulsion engines, and the thrust of at least one of the propulsion engines may be adjusted based, at least in part, on the distance between that propulsion engine and the centre of mass of the aircraft. For example, to generate a given moment, the method may involve increasing the thrust of an engine near to the centre of gravity by a particular amount, or increasing the thrust of another engine further from the centre of gravity by a lower amount (because of the larger lever arm) to generate the moment.

The at least one control effector may comprise at least one control surface. Controlling the at least one of the control effectors may comprise adjusting an angle of the at least one control surface. The control surface may be, for example, an aerodynamic surface of the aircraft such as a flap of a canard and/or a wing of the aircraft. In particular, the control surface may be an adjustable flap of the aircraft. The adjustable flap may enable generating local aerodynamic z-forces to control movement of the aircraft in the z-direction and to generate pitch and roll moments.

The at least one control effector may comprise at least one engine mounted at or near the control surface, the position of the engine being movable with the control surface for variation of a thrust vector, specifically variation of the thrust vector direction. For example, the engine may be a propulsion engine mounted on or in an adjustable flap of a canard or a wing of an aircraft. When the angle of the flap (i.e., the control surface) is adjusted, the engine moves with the flap such that the direction of the thrust vector is also adjusted. In one extreme position, the engine may be essentially horizontal to provide an x-force. In another extreme position, the engine may be essentially vertical to provide a z-force. Between these extremes, the engine provides a force with an x-component and a z-component.

The control effectors may be located on wings and/or on canards of the aircraft. In particular, the control effectors may be engines, such as propulsion engines, mounted within adjustable flaps of the canards and/or wings of the aircraft. In this way the control effectors can generate forces in multiple degrees of freedom by changing the angle of flaps generates aerodynamic forces as well as changing the angle of the thrust produced by the engines.

According to another aspect disclosed herein, there is provided an aircraft comprising a processor and memory storing computer code which, when executed on the processor, performs the method as aforementioned.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Any feature in one aspect of the invention may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory. Any apparatus feature as described herein may also be provided as a method feature, and vice versa. Furthermore, features implemented in hardware may generally be implemented in software, and vice versa. Any reference to software and hardware features herein should be construed accordingly.

The invention extends to methods, system and apparatus substantially as herein described and/or as illustrated with reference to the accompanying figures.

One or more aspects of the present invention will now be described, by way of example only, and with reference to the accompanying drawings, in which:

Figure 1 is a plan view of an exemplary aircraft with multiple control effectors;

Figures 2a and 2b show exemplary distributions of x-forces between the control effectors;

Figures 3a and 3b show exemplary distributions of z-forces between the control effectors generating roll moments;

Figures 4a and 4b show exemplary distributions of x-forces between the control effectors generating yaw moments;

Figures 5a and 5b show a distribution of x-forces between the control effectors generating a pitch moment;

Figure 6 shows a distribution of z-forces between the control effectors generating no overall moment;

Figure 7 shows a distribution of z-forces between the control effectors generating an overall roll moment;

Figure 8 shows a distribution of z-forces between the control effectors generating an overall pitch moment;

Figure 9 shows a distribution of x-forces between the control effectors generating an overall yaw moment; and

Figure 10 shows a flow diagram of the steps of the method described herein.

Detailed description

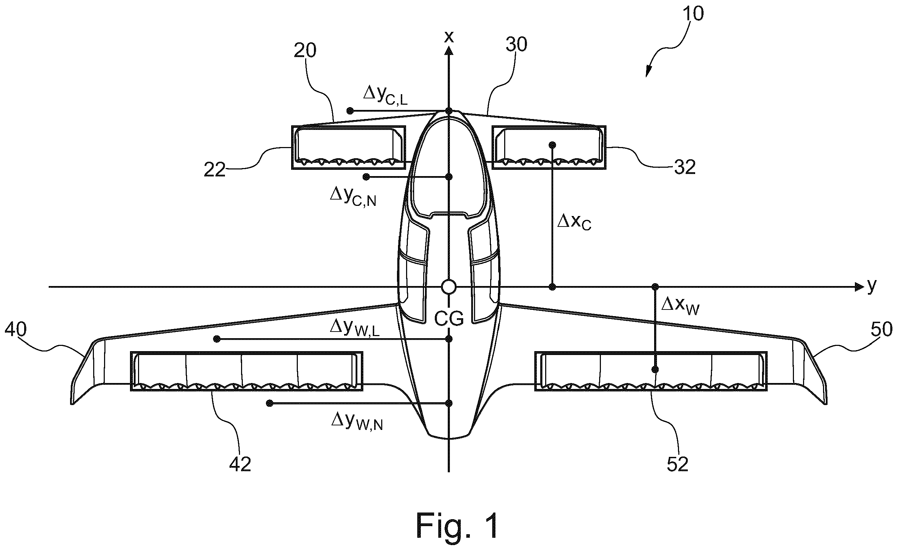

Figure 1 shows a vertical take-off and landing (VTOL) aircraft 10. The aircraft 10 has a left canard 20 and a right canard 30 which respectively comprise a left canard control effector 22 and a right canard control effector 32. The aircraft 10 also has as left wing 40 and a right canard 50 which respectively comprise a left wing control effector 42 and a right wing control effector 52. The canards and wings extend from a fuselage of the aircraft, and the canards are located forward of the wings on the fuselage. The aircraft has a centre of gravity (CG), also referred to herein as a centre of mass, which in this example is located slightly after the centre of the fuselage, towards the wings.

The forward-backward axis of the aircraft is referred to herein as the "x" direction or "x" axis (as shown in Figure 1) and the term "x-forces" is used to refer to forces acting along the "x" direction. The horizontal axis of the aircraft is referred to herein as the "y" direction or "y" axis (as shown in Figure 1) and the term "y-forces" is used to refer to forces acting along the "y" direction. The vertical axis of the aircraft is referred to herein as the "z" direction or "z" axis (into or out of the page in Figure 1) and the term "z-forces" is used to refer to forces acting along the "z" direction.

The control effectors (22, 32, 42, 52) are multi-purpose control effectors in that they each effect movement of the aircraft in multiple degrees of freedom. Specifically, the control effectors comprise propulsion engines mounted within adjustable flaps on each of the canards and wings. Therefore, the control effectors each include an aerodynamic surface for effecting aerodynamic forces on the aircraft and one or more propulsion units for effecting thrust forces on the aircraft. For example, the propulsion units may provide a thrust force in a forward direction ("x" shown in Figure 1) when the aircraft is in a cruising configuration, or the propulsion units may provide a thrust force in a vertical direction ("z", into or out of the page in Figure 1) when the aircraft is in a take-off or landing configuration.

Each of the control effectors is located a distance away from the centre of gravity (CG) of the aircraft. Therefore, any force generated by the control effectors acts with a lever arm relative to the centre of gravity of the aircraft. The lever arms associated with each control effector, as shown in Figure 1, are as follows:

- $\Delta x_C$ is the effective canard lever arm in the x-direction with respect to the centre of gravity when generating z-forces
- $\Delta x_W$ is the effective wing lever arm in the x-direction with respect to the centre of gravity when generating z-forces

- $\Delta y_{C,L}$ is the effective canard lever arm in the y-direction with respect to the centre of gravity when generating z-forces to effect a roll moment
- $\Delta y_{W,L}$ is the effective wing lever arm in the y-direction with respect to the centre of gravity when generating z-forces to effect a roll moment
- $\Delta y_{C,N}$ is the effective canard lever arm in the y-direction with respect to the centre of gravity when generating x-forces to effect a yaw moment
- $\Delta y_{W,N}$ is the effective wing lever arm in the y-direction with respect to the centre of gravity when generating x-forces to effect a yaw moment

Additional relevant lever arms described herein, but not shown in Figure 1, are as follows:

- $\Delta z_C$ is the effective canard lever arm in the z-direction with respect to the centre of gravity which generates pitch coupling (which requires correction) when generating x-forces as described below with reference to Figures 5a and 5b
- $\Delta z_W$ is the effective wing lever arm in z-direction with respect to the centre of gravity which generates pitch coupling (which requires correction) when generating x-forces as described below with reference to Figures 5a and 5b

The subscript "C" when used herein refers to the canards, and the subscript "W" refers to the wings. The subscript "CL" refers to the left canard, "CR" refers to the right canard, "WL" refers to the left wing, and "WR" refers to the right wing. The subscript "L" refers to roll moments, the subscript "M" refers to pitch moments, and the subscript "N" refers to yaw moments.

Due to the different nature of the underlying physical phenomena, the lateral lever arms for the generation of x-forces ($\Delta y_{C,N}$ and $\Delta y_{W,N}$ in order to generate yaw moments) and z-forces ($\Delta y_{C,L}$ and $\Delta y_{W,L}$ in order to generate roll moments) may be different. In particular, when the adjustable flaps rotate, the position of the engine relative to the centre of gravity will move. Therefore, the distance between the engines and the centre of gravity may be different when the engines are used to generate z-forces (e.g., when the engines are pointing downwards in the z-direction, when the aircraft is in a take-off or landing configuration) and when the engines are used to generate x-forces (e.g., when the engines are pointing backwards in the x-direction, when the aircraft is in a cruising configuration).

### *Canard weighting factor*

As described above, the allocation of force and moment commands on an aircraft with multi-purpose control effectors is a very complex, multi-dimensional problem partly because a multi-purpose control effector may be used to generate forces and moments in all six degrees of freedom at the same time. With the method of the present disclosure, the complexity of the control allocation algorithm is reduced by translating the "global" force and moment allocation problem into multiple "local" force allocation problems. The "global" force is the sum of all force contributions (including gravity, propulsion, and aerodynamic forces) acting on the centre of gravity of the aircraft. The "local" force is the individual force contribution provided by each control effector. In this example, the global force consists of four local forces, each of local force representing one of the four control effectors (canard left, canard right, wing left, wing right).

The breakdown of the global forces and moments into individual local force and moment command contributions may be linked to the aircraft's geometric and aerodynamic properties as well as the position of the centre of gravity. For this reason, pitch moment commands must be broken down to local canard and wing z-force command contributions in a certain way in order not to generate a net z-force acting on the aircraft which would affect the aircraft level. Similarly, global z-force commands need to be distributed to local canard and wing z-force command contributions in a certain way in order not to generate any unwanted pitch moments. However, for the distribution of roll moment commands, yaw moment commands and x-force commands, the distribution of forces between the canards and the wings is arbitrary. In order to control this distribution, the canard weighting factors are used.

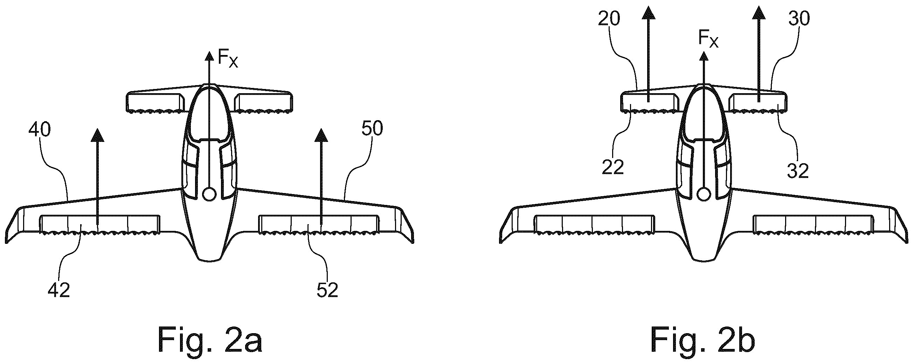

Figures 2a to 4b show exemplary distributions of forces between the canards and the wings with different canard weighting factors.

Figures 2a, 3a, and 4a show distributions in which the force contribution of the canards is minimised, and the force contribution of the wings is maximised, in which case the canard weighing factor is at a minimum. Figures 2b, 3b, and 4b show distributions in which the force contribution of the canards is maximised and the force contribution of the wings is minimised, in which case the canard weighing factor is at a maximum. At the most extreme, for the distribution of roll moment commands, yaw moment commands and x-force commands, 100% of the global force may be provided by the canards and 0% by the wings, or vice versa.

Figures 2a and 2b show exemplary x-force distributions. In Figure 2a, the x-forces are generated to the maximum extent possible by the control effectors 42, 52 located on the wings 40, 50 as indicated by the arrows in Figure 2a, with the control effectors 22, 32 located on the canards 20, 30 providing a minimal force contribution. In Figure 2b the x-forces are generated to the maximum extent possible by the control effectors 22, 32 located on the canards 20, 30 as indicated by the arrows in Figure 2b, with the control effectors 42, 52 located on the wings 40, 50 providing a minimal force contribution. The canard weighting factor for the distribution of global x-forces between the canards and the wings is denoted by "$k_{C,F_x}$".

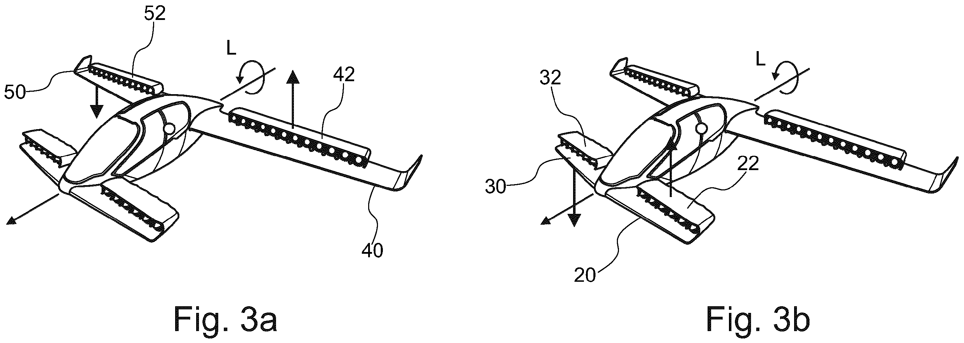

Figures 3a and 3b show exemplary x-force distributions for generating a roll moment. In Figure 3a the z-forces required to generate a roll moment are generated to the maximum extent possible by the control effectors 42, 52 located on the wings 40, 50 as indicated by the arrows in Figure 3a, with the control effectors 22, 32 located on the canards 20, 30 providing a minimal force contribution. In Figure 3b the z-forces required to generate a roll moment are generated to the maximum extent possible by the control effectors 22, 32 located on the canards 20, 30 as indicated by the arrows in Figure 3b, with the control effectors 42, 52 located on the wings 40, 50 providing a minimal force contribution. In both figures, the force contributions provided by the left and right control effectors are in opposite directions in the z-axis thereby to generate the roll moment about the x-axis without generating a net z-force on the aircraft level. The canard weighting factor for the distribution of roll moment forces between the canards and the wings is denoted by "$k_{C,L}$".

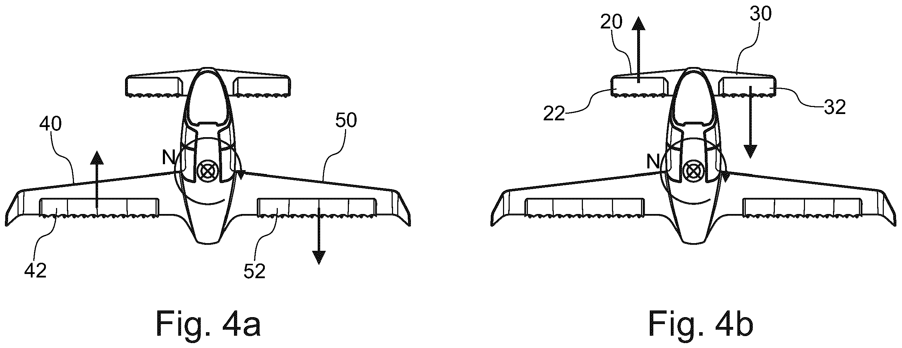

Figures 4a and 4b show exemplary x-force distributions for generating a yaw moment. In Figure 4a the x-forces required to generate a yaw moment are generated to the maximum extent possible by the control effectors 42, 52 located on the wings 40, 50 as indicated by the arrows in Figure 4a, with the control effectors 22, 32 located on the canards 20, 30 providing a minimal force contribution. In Figure 4b the x-forces required to generate a yaw moment are generated to the maximum extent possible by the control effectors 22, 32 located on the canards 20, 30 as indicated by the arrows in Figure 4b, with the control effectors 42, 52 located on the wings 40, 50 providing a minimal force contribution. In both figures, the force contributions provided by the left and right control effectors are in opposite directions in the x-axis thereby to generate the yaw moment about the z-axis without generating a net force in the x-direction. The canard weighting factor for the distribution of yaw moment forces between the canards and the wings is denoted by "$k_{C,N}$".

While Figures 2a to 4b show extreme cases where the either a maximum or minimum force contribution is provided by either the canards or the wings, in many cases both the canards and the wings will provide some a contribution to the global force that is somewhere between the maximum and minimum contribution, with the distribution of forces between the canards and the wings being determined by the canard weighting factor.

### Distribution of global x-forces to local x-forces

Figures 5a and 5b show an exemplary distribution of global x-forces to local x-forces at each control effector. The distributed x-forces in this example generate a pitch moment that requires correction.

As discussed above, the distribution of global x-forces between the local x-forces on the canard and the local x-forces on the wing can generally be arbitrary and is determined by the corresponding canard weighting factor $k_{C,F_x}$. The canard weighting factor in this case can be selected arbitrarily.

The mathematical distribution in vector form is captured by the follow equation:

$$\Delta F_{x,local,cmd,F_x}\left(F_{x,global,cmd}\right) = \begin{pmatrix} k_{C,F_x} \\ k_{C,F_x} \\ 1 - k_{C,F_x} \\ 1 - k_{C,F_x} \end{pmatrix} \cdot \frac{F_{x,global,cmd}}{2}$$

In this equation:

- $\Delta F_{x,local,cmd,F_x}(F_{x,global,cmd})$ is a 4 x 1 command vector in which each vector element represents the local x-direction force command for each of the four control effectors of the aircraft (i.e., the left canard, right canard, left wing, and right wing);

- $\begin{pmatrix} k_{C,F_x} \\ k_{C,F_x} \\ 1-k_{C,F_x} \\ 1-k_{C,F_x} \end{pmatrix}$ is 4 x 1 distribution vector comprising the canard weighting factor;

- $F_{x,global,cmd}$ is the global x-force command to be distributed to local x-force commands;

- The factor 1/2 comes from the distribution to *two* canards/wings.

Therefore, taking an example in which the canard weighting factor is selected to be 0.4 (i.e., 40% of the global x-force is provided by the canards, and 60% is provided by wings), the x-direction force command vector $\Delta F_{x,local,cmd,F_x}$

$(F_{x,global,cmd})$ will be: $\begin{pmatrix} 0.2F_{x,global,cmd} \\ 0.2F_{x,global,cmd} \\ 0.3F_{x,global,cmd} \\ 0.3F_{x,global,cmd} \end{pmatrix}$ . In other words, each of the two canards provides a 20% contribution of the global force, and each of the two wings provides a 30% contribution to the global force. The total of all four local force contributions is 100% of the global force.

The control effectors may be offset from the centre of gravity in the z-direction, and the degree of the offset might change depending on the flap position (which changes with the airspeed). In the example shown in Figure 5b, the control effectors located on the wings are offset from the centre of gravity (CG) by a distance of $\Delta z_W$. This offset means that the force contribution provided by the left and right wings also generates a downward pitch moment. In order to counteract this moment, a pitch correction may be introduced. The pitch moment correction command ($\Delta M_{cmd,F_x}$) may be calculated in accordance with the following equation:

$$\Delta M_{cmd,F_x} = -F_{x,global,cmd} \cdot \left( \Delta z_c \cdot k_{C,F_x} + \Delta z_W \cdot \left(1 - k_{C,F_x}\right) \right)$$

The control effectors located on the canards are not offset from the centre of gravity in the z-direction in the example shown in Figures 5a and 5b, but in other examples they may be offset by a distance of $\Delta z_c$ which may either contribute to the pitch coupling generated by the wing control effectors or counteract the pitch coupling (depending on whether $\Delta z_c$ is the same direction or the opposite direction to $\Delta z_W$).

### *Distribution of global z-forces to local z-forces*

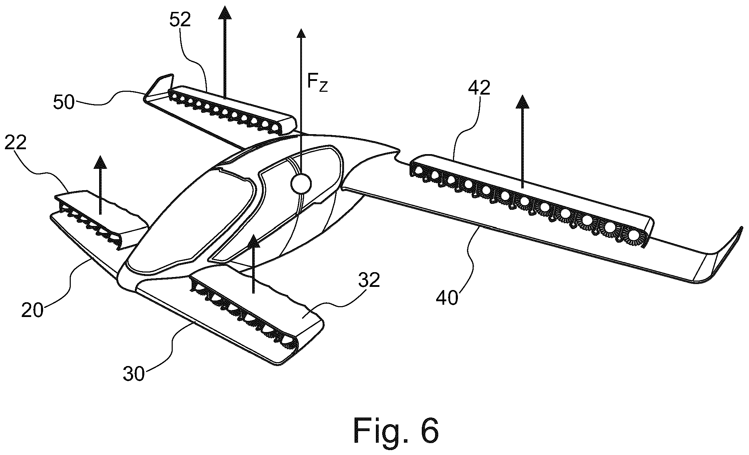

Figure 6 shows an exemplary distribution of global z-forces to local z-forces at each control effector. The distribution of z-forces in this example is determined to prevent generating any moment on the aircraft.

To avoid generating a moment on the aircraft, the weighting of distribution of z-forces between the canards and the wings (i.e., the canard weighting factor) cannot be arbitrary, as it can be for the distribution of x-forces. Applying an arbitrary canard weighting first and correcting for moments in a second step (similar to the principle described for the x-force distribution) is less preferable as both global z-forces (to affect the z-movement of the aircraft) and pitch moments are eventually distributed to local z-forces. Typically, the z-force components distributed to the canards are proportionally smaller than the force components distributed to the wings because the position of the centre of gravity is located on the fuselage slightly closer to the wings than to the canards.

Similar to the global force commands, global moment commands can be represented as local force contributions. Moments are always generated when local forces are generated by the control effectors at a lever arm from the centre of gravity. The present control method makes use of this relationship. Similar to the distribution of global x-force commands, the breakdown of global z-force commands to local z-force command contributions can be described in a mathematical form. In particular, an equation for distributing the global z-force to local z-forces can be derived as follows.

The global z-force acting on the aircraft ($F_{z,global,cmd}$) is given by the sum of the z-forces generated by each of the two canards (i.e., $2 \cdot F_{z,local,C}$) and by each of the two wings (i.e., $2 \cdot F_{z,local,W}$). This is set out mathematically equation (*I*) below:

$$F_{z,global,cmd} = 2 \cdot \left( F_{z,local,C} + F_{z,local,W} \right) \qquad (I)$$

In order to avoid generating a residual pitch moment on the aircraft, the sum of the moments generated by the local z-forces generated by the canards and the wings must be zero, as given by equation (*II*) below:

$$M_{residual} = 0 = 2 \cdot \left( -F_{z,local,C} \cdot \Delta x_C + F_{z,local,W} \cdot \Delta x_W \right) \qquad (II)$$

Equation (*II*) can be rearranged and rewritten as shown in equation (*III*) below:

$$F_{z,local,C} = F_{z,local,W} \cdot \frac{\Delta x_W}{\Delta x_C} \qquad (III)$$

Substituting equation (*III*) into (*I*) and rearranging provides the following two expressions for the local z-force contributions of each of the canards and wings:

$$F_{z,local,C} = \frac{F_{z,global,cmd}}{2} \cdot \frac{\Delta x_W}{\Delta x_C + \Delta x_W} = \frac{F_{z,global,cmd}}{2} \cdot \left(1 - \frac{1}{k_{F_z}}\right) \qquad \text{with } k_{F_z} = \frac{\Delta x_C + \Delta x_W}{\Delta x_C}$$

$$F_{z,local,W} = \frac{F_{z,global,cmd}}{2 \cdot \left(\frac{\Delta x_W}{\Delta x_C} + 1\right)} = \frac{F_{z,global,cmd}}{2} \cdot \frac{\Delta x_C}{\Delta x_C + \Delta x_W} = \frac{F_{z,global,cmd}}{2 \cdot k_{F_z}} \qquad \text{with } k_{F_z} = \frac{\Delta x_C + \Delta x_W}{\Delta x_C}$$

Vectorising the above two expressions provides a single equation for distributing z-forces as follows:

$$\Delta F_{z,local,cmd,F_z}\left(F_{z,global,cmd}\right) = \begin{pmatrix} 1 - \dfrac{1}{k_{F_z}} \\ 1 - \dfrac{1}{k_{F_z}} \\ \dfrac{1}{k_{F_z}} \\ \dfrac{1}{k_{F_z}} \end{pmatrix} \cdot \frac{F_{z,global,cmd}}{2}$$

In which: $k_{F_z} = \dfrac{\Delta x_C + \Delta x_W}{\Delta x_C}$

In this equation:

- $\Delta F_{z,local,cmd,Fz}(F_{z,global,cmd})$ is a 4 x 1 command vector in which each vector element represents the local z-direction force command for each of the four control effectors of the aircraft (i.e., the left canard, right canard, left wing, and right wing);

- $\begin{pmatrix} 1 - \frac{1}{k_{F_z}} \\ 1 - \frac{1}{k_{F_z}} \\ \frac{1}{k_{F_z}} \\ \frac{1}{k_{F_z}} \end{pmatrix}$ is the 4 x 1 distribution vector comprising the canard weighting factor $k_{F_z}$.

- $F_{z,global,cmd}$ is the global z-force command to be distributed to local z-force commands;

- The factor 1/2 again comes from the distribution to *two* canards/wings as derived above.

In this case is the canard weighting factor $k_{F_z} = \dfrac{\Delta x_C + \Delta x_W}{\Delta x_C}$, or in other words it is the ratio of the sum of the canard and wing lever arms to the canard lever arm. Therefore, the closer centre of gravity to the wings, the smaller $\Delta x_W$ will be and the canard weighting factor will tend towards 1, meaning that the first and second elements of the distribution vector $\left(1 - \frac{1}{k_{F_z}}\right)$ will tend towards 0 and the third and fourth elements of the distribution vector will tend towards 1 thereby producing a command vector that distributes z-forces to the wings more than to the canards. The closer centre of gravity to the canards, the smaller $\Delta x_C$ will be and the canard weighting factor will tend towards a large number, meaning that the first two elements of the distribution vector $\left(1 - \frac{1}{k_{F_z}}\right)$ will tend towards 1 and the third and fourth elements of the distribution vector will tend towards 0 thereby producing a command vector that distributes z-forces to the canards more than to the wings.

*Distribution of roll moment commands to local z-forces*

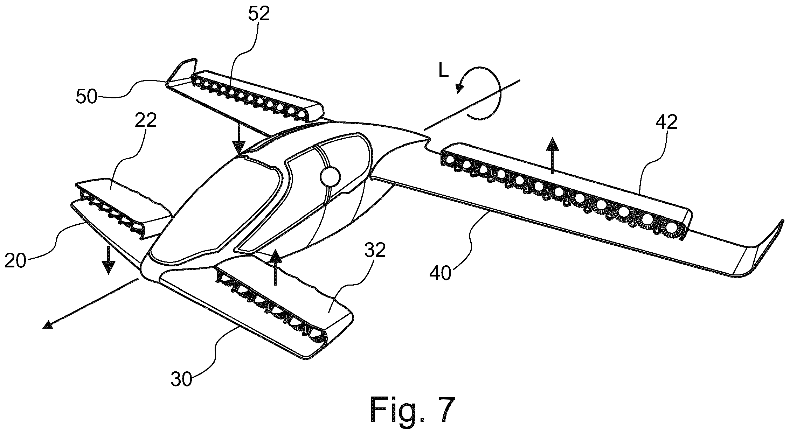

Figure 7 shows an exemplary distribution of roll moment commands to local z-forces at each control effector.
Similar to the distribution of x-force commands described above, the distribution of a roll moment command to local z-forces is defined as a function of the corresponding canard weighting. The local force commands for the left canard and right canard have the same magnitude, but with different signs. The same holds true for the left and right wings. Both local force commands on the left side of the aircraft (i.e., the left canard and the left wing) have the same sign, but possibly with different magnitudes. The same applies to the right side of the aircraft (i.e., the right canard and right wing).
The mathematical expression of the roll moment command distribution to local z-force command contributions is therefore as follows:

$$\Delta F_{z,local,cmd,L}(L_{cmd}) = \begin{pmatrix} -\dfrac{k_{C,L}}{\Delta y_{C,L}} \\ \dfrac{k_{C,L}}{\Delta y_{C,L}} \\ -\dfrac{1 - k_{C,L}}{\Delta y_{W,L}} \\ \dfrac{1 - k_{C,L}}{\Delta y_{W,L}} \end{pmatrix} \cdot \dfrac{L_{cmd}}{2}$$

In this equation:

- $\Delta F_{z,local,cmd,L}(L_{cmd})$ is a 4 x 1 command vector in which each vector element represents the local z-direction force command for each of the four control effectors of the aircraft (i.e., the left canard, right canard, left wing, and right wing);

- $\begin{pmatrix} -\frac{k_{C,L}}{\Delta y_{C,L}} \\ \frac{k_{C,L}}{\Delta y_{C,L}} \\ -\frac{1-k_{C,L}}{\Delta y_{W,L}} \\ \frac{1-k_{C,L}}{\Delta y_{W,L}} \end{pmatrix}$ is the 4 x 1 distribution vector comprising the canard weighting factor $k_{C,L}$ and the lever arms $\Delta y_{C,L}$ and $\Delta y_{W,L}$ for the canard and wing respectively in the y-direction with respect to the centre of gravity;

- $L_{cmd}$ is the roll command to be distributed to local z-force commands;
- The factor 1/2 again comes from the distribution to two canards/wings as derived above.

No pitch moment is generated by the local forces, because the pitch moments generated by the left hand side control effectors (left canard and left wing) are cancelled by the pitch moments generated by the right hand side control effectors (right canard and right wing).

*Distribution of pitch moment commands to local z-forces*

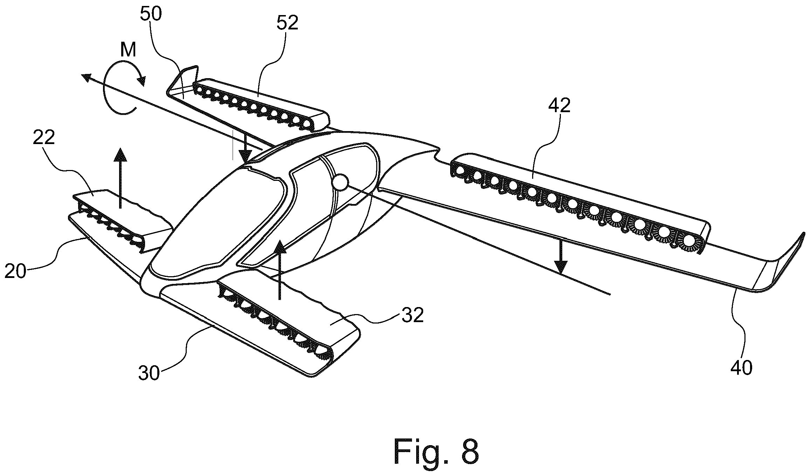

Figure 8 shows an exemplary distribution of pitch moment commands to local z-forces at each control effector.
Pitch moments are distributed to local z-forces on both the canards and the wings. In order not to generate any residual net z-forces on aircraft level, the local z-force commands allocated to canards must be of the same magnitude as the z--force commands allocated to wings, but in the opposite direction (i.e., a different sign). Figure 8 shows an exemplary local z-force distribution resulting from a positive pitch moment command.
The breakdown of a pitch moment command to local z-force command contributions can be described in a mathematical form. In particular, an equation for distributing the global z-force to local z-forces can be derived as follows.
First, the net z-force acting on the aircraft ($F_{z,residual}$) is given by the sum of the z-forces generated by each of the two canards (i.e., $2 \cdot F_{z,local,C}$) and by each of the two wings (i.e., $2 \cdot F_{z,local,W}$). In order to avoid generating a residual z-force on the aircraft, the sum of the local z-forces generated by the canards and the wings must be zero. This is set out mathematically equation (*I*) below:

$$F_{z,residual} = 0 = 2 \cdot \left( F_{z,local,C} + F_{z,local,W} \right) \qquad (I)$$

Second, the pitch moment generated by each of the two canards and the two wings is given by multiplying the force generated by each canard or wing by its lever arm from the centre of gravity ($\Delta x_C$ and $\Delta x_W$ respectively). Taking account of the opposite directions (and therefore signs) of the forces, the pitch moment ($M_{cmd}$) can be expressed as follows in equation (II):

$$M_{cmd} = 2 \cdot (-F_{z,local,C} \cdot \Delta x_C + F_{z,local,W} \cdot \Delta x_W) \qquad (II)$$

From equation (I) it can be shown that:

$$F_{z,local,W} = -F_{z,local,C} \qquad (III)$$

Substituting equational (III) into equation (II) and rearranging gives:

$$F_{z,local,C} = -\frac{M_{cmd}}{2 \cdot k_M}$$

$$F_{z,local,W} = \frac{M_{cmd}}{2 \cdot k_M}$$

where

$$k_M = \Delta x_C + \Delta x_W$$

Vectorising the above expressions provides a single equation for distributing pitch moments to z-forces as follows:

$$\Delta F_{z,local,cmd,M}(M_{cmd}) = \begin{pmatrix} -\frac{1}{k_M} \\ -\frac{1}{k_M} \\ \frac{1}{k_M} \\ \frac{1}{k_M} \end{pmatrix} \cdot \frac{M_{cmd}}{2} \qquad \text{where } k_M = \Delta x_C + \Delta x_W$$

In this equation:

- $\Delta F_{z,local,cmd,M}(M_{cmd})$ is a 4 x 1 command vector in which each vector element represents the local z-direction force command for each of the four control effectors of the aircraft (i.e., the left canard, right canard, left wing, and right wing);

- $\begin{pmatrix} -\frac{1}{k_M} \\ -\frac{1}{k_M} \\ \frac{1}{k_M} \\ \frac{1}{k_M} \end{pmatrix}$ is the 4 x 1 distribution vector comprising the canard weighting factor $k_M$ which comprises the lever arms $\Delta x_C$ and $\Delta x_W$ for the canard and wing respectively in the x-direction with respect to the centre of gravity;

- $M_{cmd}$ is the pitch command to be distributed to local z-force commands;
- The factor 1/2 again comes from the distribution to *two* canards/wings as derived above.

In this example, the pitch moment command $M_{cmd}$ is considered to already include the pitch coupling correction from the global x-force generation (i.e., $M_{cmd} = M_{cmd,original} + \Delta M_{cmd,F_x}$).

### *Distribution of yaw moment commands to local x-forces*

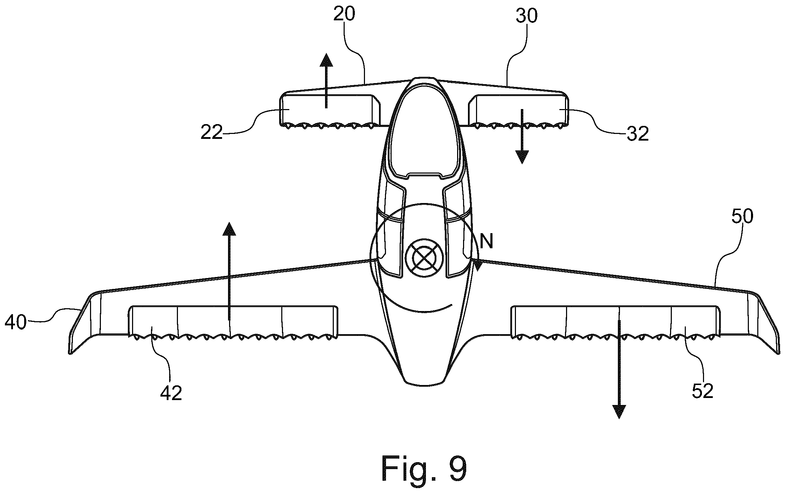

Figure 9 shows an exemplary distribution of yaw moment commands to local z-forces at each control effector.

The yaw moment command distribution is very similar to the distribution of roll moment commands. In contrast however, the moment is distributed to local x-forces rather than local z-forces. Again, both canard contributions have the same magnitude, and so do the wing contributions, but the contributions by the control effectors on the left-hand side are in the opposite direction to the contributions by the control effectors on the right-hand side. Canard and wing contributions for the same side of the aircraft have the same sign.

The mathematical expression of the yaw moment command distribution to local x-force command contributions is therefore as follows:

$$\Delta F_{x,local,cmd,N}(N_{cmd}) = \begin{pmatrix} \dfrac{k_{C,N}}{\Delta y_{C,N}} \\ -\dfrac{k_{C,N}}{\Delta y_{C,N}} \\ \dfrac{1-k_{C,N}}{\Delta y_{W,N}} \\ -\dfrac{1-k_{C,N}}{\Delta y_{W,N}} \end{pmatrix} \cdot \dfrac{N_{cmd}}{2}$$

In this equation:

- $\Delta F_{x,local,cmd,N}(N_{cmd})$ is a 4 x 1 command vector in which each vector element represents the local x-direction force command for each of the four control effectors of the aircraft (i.e., the left canard, right canard, left wing, and right wing);

- $\begin{pmatrix} \frac{k_{C,N}}{\Delta y_{C,N}} \\ -\frac{k_{C,N}}{\Delta y_{C,N}} \\ \frac{1-k_{C,N}}{\Delta y_{W,N}} \\ -\frac{1-k_{C,N}}{\Delta y_{W,N}} \end{pmatrix}$ is the 4 x 1 distribution vector comprising the canard weighting factor $k_{C,N}$ and the lever arms $\Delta y_{C,N}$ and $\Delta y_{W,N}$ for the canard and wing respectively in the y-direction with respect to the centre of gravity;
- $N_{cmd}$ is the yaw command to be distributed to local x-force commands;
- The factor 1/2 again comes from the distribution to *two* canards/wings as derived above.

No net x-direction force is generated by the local forces, because the x-forces generated by the left hand side control effectors (left canard and left wing) are cancelled by the x-forces generated by the right hand side control effectors (right canard and right wing), resulting in only a yaw moment to rotate the aircraft about the centre of gravity without creating a net x-force to move the aircraft forward in the x-direction.

*Summation of local force contributions*

Once all of the global forces and moments have been distributed to local x-forces and z-forces at each control effector (as above), the individual local x-force and z-force command contributions from each global-to-local distribution need to be summed up to determine the *total* (index t), local force command on each individual control effector. Each local force contribution described above is a 4 x 1 vector where each of the four elements represents one of the two canards and two wings.

The summation of the local x-force contributions can be expressed as follows:

$$F_{x,local,cmd,t} = \Delta F_{x,local,cmd,F_x}\left(F_{x,global,cmd}\right) + \Delta F_{x,local,cmd,N}(N_{cmd})$$

The total x-force command therefore includes two components: the total global x-force commands ($F_{x,local,cmd,F_x}$) and yaw moment commands ($F_{x,local,cmd,N}$).

The summation of the local z-force contributions can be expressed as follows:

$$F_{zlocal,cmd,t} = \Delta F_{z,local,cmd,F_z}\left(F_{z,global,cmd}\right) + \Delta F_{z,local,cmd,L}(L_{cmd}) + \Delta F_{z,local,cmd,M}(M_{cmd})$$

The total z-force command therefore includes three components: the total global z-force commands ($F_{z,lo-}$

$_{cal,cmd,F_z}$), the roll moment commands ($\Delta F_{z,local,cmd,L}$) and the pitch moment commands ($F_{z,local,cmd,M}$).

Resultantly, there are now four individual control allocation problems that need to be solved - one for each canard and wing - rather than a more complex single global control allocation problem. The problems are solved by finding parameters of the control effectors which, according to an aircraft simulation model, generate the required combination of local x-forces and local z-forces. In the examples described herein, the control effects are propulsion engines mounted in adjustable flaps. Accordingly, the parameters of the control effectors include: (a) a flap angle and (b) an engine power (essentially, engine rotor speed). In case of another aircraft configuration, different control effectors may be used having different adjustable parameters for generating forces.

For simplicity, in some cases each canard and each wing may apply the same flap angle command and rotor speed command to all the flaps and engines within that wing/canard. As a consequence, the local force problem is deterministic and is solved by finding a combination of two actuator states (i.e. one flap angle state and one rotor speed state) that generate a combination of the required local x-forces and local z-forces.

In other cases, the flap angle or rotor speed commands may be different for different engines within the wing/canard. For example, the thrust (i.e., rotor speed) of at least one of the propulsion engines within a wing/canard may be adjusted depending, at least in part, on the distance between that engine and the centre of mass of the aircraft. In this example, the moment can be increased by increasing the rotor speeds of engines located furthest from the centre of mass.

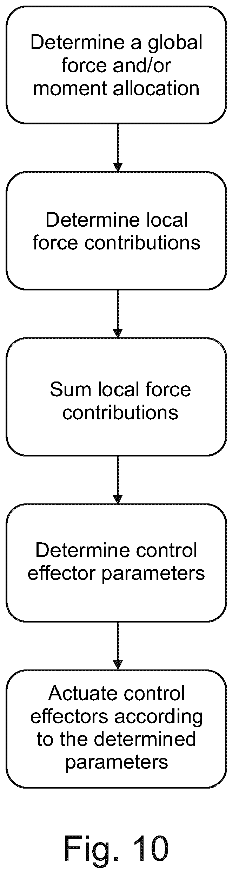

Figure 10 shows a flow diagram of the steps of the method described herein.

In a first step, a global force and/or moment allocation required to control movement of an aircraft is determined. The global force and/or moment allocation relates to a net force and/or moment to act on the aircraft. For example, if it is required that the aircraft moves forward and upward, the global force relates to the net x-force required to move the aircraft forward by the desired amount and the net z-force to move the aircraft upward by the desired amount.

In a second step, a local force and/or moment allocation is determined. The local force and/or moment allocation relates to the force and/or moment contribution to the net force provided by at least one of the control effectors. Thus, the local force and/or moment allocation represents the individual local force contributions provided by each control effector. The global x-forces and z-forces are broken down into individual local x-force and z-force contributions as described above in the sections headed "Distribution of global x-forces to local x-forces" and "Distribution of global z-forces to local z-forces". The moments are broken down into individual local x-force and z-force contributions as described above in the sections headed "Distribution of roll moment commands to local z-forces", "Distribution of pitch moment commands to local z-forces" and "Distribution of yaw moment commands to local z-forces".

In a third step, the local x-force and z-force contributions from each control effector are summed to provide the total force contributions required from each control effector to provide the global forces and moments required in the first step. As a result of this summation, there are four control allocation problems (one for each of the canards and wings) which must be solved.

In a fourth step, the control allocation problems are solved to determine control effector parameters that generate the required combination of local x-forces and local z-forces. As described above, these parameters may be a flap angle for each of the canards and wings, and a rotor speed for the engines located in the flaps, which will generate the x-forces and z-forces required at each canard/wing.

In a fifth step, the control effectors are actuated according to the determined parameters to generate the determined local forces and/or moments. For example, the flap is adjusted to the determined flap angle, and the engine rotor speed is adjusted to the determined level.

While the invention has been described above with reference to a VTOL aircraft, the concepts can also be applied to other aircraft configurations. For example, the concepts may be applied to aircraft with means to generate lateral forces (in the y-direction) directly through appropriate control devices.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.


**Claims**

1. A computer implemented method for controlling an aircraft (10), the aircraft having multiple control effectors (22, 32, 42, 52), the method comprising:

   determining a global force and/or moment allocation required to control movement of the aircraft (10), the global force and/or moment allocation relating to a net force and/or moment to act on the aircraft (10);

determining a local force and/or moment allocation, the local force and/or moment allocation relating to a force and/or moment contribution to the net force provided by at least one of the control effectors (22, 32, 42, 52); and

controlling at least one of the control effectors (22, 32, 42, 52) to generate the determined local force and/or moment.

2. A method according to Claim 1, comprising determining at least two local force and/or moment allocations relating to force and/or moment contributions to the net force provided by at least two control effectors (22, 32, 42, 52).

3. A method according to Claim 2, wherein each of the at least two local force and/or moment allocations corresponds to a different degree of freedom of the aircraft (10).

4. A method according to any preceding claim, wherein controlling the at least one of the control effectors (22, 32, 42, 52) comprises adjusting at least one parameter of the control effectors to generate the local force and/or moment.

5. A method according to Claim 4, wherein the at least one parameter is adjusted based, at least in part, on at least one condition external to the aircraft (10).

6. A method according to any preceding claim, wherein the local force and/or moment allocation is determined based, at least in part, on at least one condition external to the aircraft (10).

7. A method according to any preceding claim, wherein the local force and/or moment allocation for one control effector (22, 32, 42, 52) is determined, at least in part, to compensate for a force and/or moment generated by another control effector.

8. A method according to any preceding claim, wherein the at least one control effector (22, 32, 42, 52) comprises at least one propulsion engine.

9. A method according to Claim 8, wherein the propulsion engine is an electric propulsion engine with a ducted fan.

10. A method according to Claim 8 or 9, wherein controlling the at least one of the control effectors (22, 32, 42, 52) comprises adjusting a thrust of the at least one propulsion engine.

11. A method according to Claim 10, wherein the control effectors (22, 32, 42, 52) comprise multiple propulsion engines, and wherein the thrust of at least one of the propulsion engines is adjusted based, at least in part, on the distance between that propulsion engine and the centre of mass of the aircraft (10).

12. A method according to any preceding claim, wherein the at least one control effector (22, 32, 42, 52) comprises at least one control surface, preferably wherein controlling the at least one of the control effectors comprises adjusting an angle of the at least one control surface.

13. A method according to Claim 12, wherein the at least one control effector (22, 32, 42, 52) comprises at least one engine mounted at or near the control surface, the position of the engine being movable with the control surface for variation of a thrust vector.

14. A method according to any preceding claim, wherein the control effectors (22, 32, 42, 52) are located on wings (40, 50) and/or on canards (20, 30) of the aircraft (10).

15. An aircraft (10) comprising a processor and memory storing computer code which, when executed on the processor, performs the method of any preceding claim.

Fig. 1

EP 4 506 770 A1

Fig. 2a

Fig. 2b

EP 4 506 770 A1

Fig. 3a

Fig. 3b

EP 4 506 770 A1

Fig. 4b

Fig. 4a

Fig. 5b

Fig. 5a

Fig. 6

EP 4 506 770 A1

Fig. 7

Fig. 8

Fig. 9

Determine a global
force and/or
moment allocation

Determine local
force contributions

Sum local force
contributions

Determine control
effector parameters

Actuate control
effectors according
to the determined
parameters

Fig. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/126995 A1 (WU YUHU [CN] ET AL) 28 April 2022 (2022-04-28) | 1-11,14, 15 | INV. G05D1/08 |
| Y | * paragraphs [0001], [0032], [0037] – [0041]; figure 1 * | 12,13 | |
| Y | US 2022/376514 A1 (CULPIN ED [DE]) 24 November 2022 (2022-11-24) | 12,13 | |
| A | * paragraphs [0093] – [0096]; figures 2-5 * | 1-11,14, 15 | |

TECHNICAL FIELDS SEARCHED (IPC)

G05D

The present search report has been drawn up for all claims

| Place of search | Date of completion of the search | Examiner |
|---|---|---|
| Munich | 11 December 2023 | Nicolaucig, Aldo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................
& : member of the same patent family, corresponding
    document

EPO FORM 1503 03.82 (P04C01)

## EP 4 506 770 A1

This annex lists the patent family members relating to the patent documents cited in  the above-mentioned European search report.
The members are as contained in the European Patent Office EDP file on
The European Patent Office is in no way liable for these particulars which are merely given for the purpose of information.

11-12-2023

| Patent document cited in search report | | Publication date | Patent family member(s) | | Publication date |
|---|---|---|---|---|---|
| US 2022126995 | A1 | 28-04-2022 | US | 2022126995 A1 | 28-04-2022 |
| | | | WO | 2021226857 A1 | 18-11-2021 |
| US 2022376514 | A1 | 24-11-2022 | CN | 115367122 A | 22-11-2022 |
| | | | EP | 3998201 A1 | 18-05-2022 |
| | | | US | 2022376514 A1 | 24-11-2022 |
| | | | WO | 2022243113 A1 | 24-11-2022 |

EPO FORM P0459

For more details about this annex : see Official Journal of the European Patent Office, No. 12/82